# EUROPÄISCHE PATENTANMELDUNG

(11) **EP 3 964 381 A1**
(43) Veröffentlichungstag der Anmeldung: **09.03.2022**
(21) Anmeldenummer: 21194524.1
(22) Anmeldetag: 02.09.2021
(51) Int. Cl.: B60L 1/00, B60L 50/64, B60L 58/20, H01M 10/42, H01M 50/284, H02J 1/10, H02J 9/06

(54) **BATTERIESYSTEM, INSBESONDERE FÜR EIN FAHRZEUG**

(30) Priorität: 08.09.2020 DE 102020211218
(71) Anmelder: Robert Bosch GmbH, 70442 Stuttgart (DE)
(72) Erfinder: Windmueller, Andreas, 71679 Asperg (DE); Gleiter, Andreas, 70437 Stuttgart (DE)

(57) **Zusammenfassung**

Die Erfindung betrifft eine Batterie (10) umfassend mindestens ein Batteriepack (12), das mindestens eine Batteriezelle (14) aufweist, und einen DC/DC-Wandler (18), welcher eingangsseitig mit dem mindestens einen Batteriepack (12) verbunden ist. Erfindungsgemäß umfasst die Batterie (10) ferner eine Schutzeinrichtung (20), die ein erstes elektrisches Einwegelement (22) und ein zweites elektrisches Einwegelement (24) aufweist, wobei das erste und zweite elektrische Einwegelement (22, 24) jeweils einen Stromeingang (26) und einen Stromausgang (28) aufweisen, wobei der DC/DC-Wandler (18) ausgangsseitig mit dem Stromeingang (26) des ersten elektrischen Einwegelements (22) verbunden ist, wobei der Stromeingang (26) des zweiten elektrischen Einwegelements (24) mit einer Gleichspannungsquelle (48) verbindbar ist, und wobei der Stromausgang (28) des ersten elektrischen Einwegelements (22) und der Stromausgang (28) des zweiten elektrischen Einwegelements (24) miteinander verbunden sind und mit einer ersten Verbrauchergruppe (54) verbindbar sind.

## Beschreibung

Die Erfindung betrifft eine Batterie umfassend mindestens ein Batteriepack, das mindestens eine Batteriezelle aufweist, und einen DC/DC-Wandler, welcher eingangsseitig mit dem mindestens einen Batteriepack verbunden ist.

Die Erfindung betrifft ferner ein Batteriesystem, das die erfindungsgemäß vorgeschlagene Batterie umfasst.

Die Erfindung betrifft auch ein Fahrzeug, das die erfindungsgemäß vorgeschlagene Batterie und/oder das erfindungsgemäß vorgeschlagene Batteriesystem umfasst.

### Stand der Technik

Es zeichnet sich ab, dass in Zukunft vermehrt elektrisch angetriebene Fahrzeuge zum Einsatz kommen werden. Solche elektrisch angetriebene Fahrzeuge, wie z.B. Hybridfahrzeuge und Elektrofahrzeuge, umfassen jeweils ein Batteriesystem, wie beispielsweise ein 48V-Batteriesystem, zur Energieversorgung bzw. Traktion des Fahrzeugs. Allerdings wird weiterhin in vielen Systemen die 12V-Ebene für Fahrzeugkomponenten wie Licht, Anzeigekomponenten, Steuergeräte usw. verwendet. Daher ist Stand der Technik eine 12V-Bleibatterie und DC/DC-Wandler, der aus der 48V Batterie die 12V nachlädt, bzw. stützt.

Das Dokument EP 3 028 890 A1 beschreibt ein Bauteil sowie eine Bordnetzgruppe für ein elektrisch antreibbares Fortbewegungsmittel mit zwei Bordnetzabschnitten unterschiedlicher Nennspannung.

### Offenbarung der Erfindung

Es wird eine Batterie, insbesondere für ein Fahrzeug, vorgeschlagen. Die Batterie umfasst dabei mindestens ein Batteriepack mit mindestens einer Batteriezelle und einen DC/DC-Wandler, welcher eingangsseitig mit dem mindestens einen Batteriepack verbunden ist. Die Batterie kann ferner ein Batteriemanagementsystem zur Überwachung und Steuerung des mindestens einen Batteriepacks aufweisen. Vorzugsweise ist die Batterie als eine 48V-Batterie ausgebildet. Vorzugsweise liegt der Ausgangsspannung des DC/DC-Wandlers auf einem 12V-Spannungslevel. Ein typischer Nominalwert eines 12V-Spannungslevels liegt bei 13,6 V. Der Spannungslevel in einem 12v-Netz kann dabei je nach Belastungstypisch zwischen 8 V und 16 V variieren.

Erfindungsgemäß umfasst die Batterie ferner eine Schutzeinrichtung, die ein erstes elektrisches Einwegelement und ein zweites elektrisches Einwegelement aufweist. Unter einem elektrischen Einwegelement wird ein elektronisches Bauelement verstanden, durch welches ein Storm nur in eine Richtung fließen kann.

Dabei weisen das erste und zweite elektrische Einwegelement jeweils einen Stromeingang und einen Stromausgang auf. Dabei ist der DC/DC-Wandler ausgangsseitig mit dem Stromeingang des ersten elektrischen Einwegelements verbunden. Dabei ist der Stromeingang des zweiten elektrischen Einwegelements mit einer Gleichspannungsquelle verbindbar. Dabei sind der Stromausgang des ersten elektrischen Einwegelements und der Stromausgang des zweiten elektrischen Einwegelements miteinander verbunden und mit einer ersten Verbrauchergruppe verbindbar.

Vorzugsweise liegt der Ausgangsspannung der Gleichspannungsquelle ebenfalls auf einem 12V-Spannungslevel.

Vorteilhaft können Komponenten der ersten Verbrauchergruppe, wie beispielsweise Echtzeituhren oder interner Wecker eines Fahrzeugs, dadurch mit einer Dauerversorgung versorgt werden.

Vorzugsweise weist die Schutzeinrichtung ein Mittel auf, das eingerichtet ist, den DC/DC-Wandler in Abhängigkeit der Ausgangsspannung der Gleichspannungsquelle zu schalten, nämlich zu aktivieren und zu deaktivieren.

Vorzugsweise weist das Mittel zur Deaktivierung des DC/DC-Wandlers einen Differenzverstärker auf. Dabei ist ein Differenzverstärker-Ausgang zum Deaktivieren des DC/DC-Wandlers mit diesem verbunden. Dabei ist ein erster Differenzverstärker-Eingang mit dem Stromeingang des zweiten elektrischen Einwegelements verbunden und ein zweiter Differenzverstärker-Eingang ist dabei mit der Masse verbunden. Dabei ist ein Widerstand zwischen dem ersten und zweiten Differenzverstärker-Eingang geschaltet. Alternativ kann der Differenzverstärker auch als Komparator mit einem Spannungsteiler bestehend aus zwei Widerständen ausgeführt sein. Dies hat den Vorteil eines geringeren Stromverbrauchs.

Vorzugsweise sind das erste und/oder zweite elektrische Einwegelement als Diode und/oder ideale Diode ausgebildet. Ideale Dioden verwenden einen MOSFET, um wie eine Diode zu funktionieren, allerdings haben sie einen viel niedrigen Spannungsabfall und kleinere Leckströme.

Vorzugsweise ist der DC/DC-Wandler in der Batterie installiert. Bevorzugt ist die Schutzeinrichtung in dem DC/DC-Wandlers installiert. Alternativ kann die Schutzeinrichtung auch beispielsweise in einem Kabelbaum des Fahrzeugs integriert sein.

Ferner wird ein Batteriesystem vorgeschlagen. Dabei umfasst das Batteriesystem eine erfindungsgemäß vorgeschlagene Batterie und eine Gleichspannungsquelle, die mit dem Stromeingang des zweiten elektrischen Einwegelements verbunden ist und mit einer zweiten Verbrauchergruppe mit dieser verbindbar ist. Die zweite Verbrauchergruppe kann dabei Komponenten aufweisen, die temporär versorgt zu werden brauchen. Zu der zweiten Verbrauchergruppe gehören beispielsweise Licht, Blinker und Hupe eines Fahrzeugs.

Vorzugsweise umfasst die Gleichspannungsquelle einen zusätzlichen DC/DC-Wandler, der eingangsseitig mit dem mindestens einen Batteriepack der erfindungsgemäß vorgeschlagenen Batterie verbindbar ist und ausgangsseitig mit dem Stromeingang des zweiten elektrischen Einwegelements verbunden ist. Ausgangsseitig ist der zusätzliche DC/DC-Wandler mit der zweiten Verbrauchergruppe verbindbar. Vorzugsweise ist der zusätzliche DC/DC-Wandler leistungsfähiger als der DC/DC-Wandler der erfindungsgemäß vorgeschlagenen Batterie.

Vorzugsweise ist die Ausgangspannung der Gleichspannungsquelle größer als die Ausgangsspannung des DC/DC-Wandlers der erfindungsgemäß vorgeschlagenen Batterie. Die Ausgangsspannung des DC/DC-Wandlers der erfindungsgemäß vorgeschlagenen Batterie und die Ausgangsspannung der Gleichspannungsquelle können beispielsweise so eingestellt werden, dass der DC/DC-Wandler der erfindungsgemäß vorgeschlagenen Batterie eine Ausgangsspannung von 12,3 V +/- 300 mV aufweist, während die Gleichspannungsquelle eine Ausgangsspannung von 13,6 V +/- 300 mV aufweist.

Das erfindungsgemäß vorgeschlagene Batteriesystem kann mit einem Standby-Betriebsmodus und einem Aktiv-Betriebsmodus eingerichtet sein. Im Standby-Betriebsmodus ist nur der DC/DC-Wandler der erfindungsgemäß vorgeschlagenen Batterie mit geringer Leistung aktiv und versorgt die Komponenten der ersten Verbrauchergruppe mit Dauerversorgung. Im Aktiv-Betriebsmodus, wie beispielsweise ein Fahrzeug ist angeschaltet, ist der zusätzliche DC/DC-Wandler, der leistungsfähiger als der DC/DC-Wandler der erfindungsgemäß vorgeschlagenen Batterie ist, aktiv und versorgt die Komponenten der ersten und zweiten Verbrauchergruppe.

Es wird auch ein Fahrzeug vorgeschlagen, das die erfindungsgemäß vorgeschlagene Batterie und/oder das erfindungsgemäß vorgeschlagene Batteriesystem umfasst.

### Vorteile der Erfindung

Die Erfindung ermöglicht den Entfall einer 12V-Batterie in einem Fahrzeug durch einen zusätzlichen 12V-Ausgang einer Traktionsbatterie. Allerdings muss in diesem Fall der 12V-Ausgang auf die Peak-Leistung der relevanten Komponenten, die dauerversorgt werden müssen, ausgelegt werden. Diese Leistung verursacht hohe Kosten und Platzbedarf in der Batterie aufgrund von beispielsweise Größe der Halbleiter und ggf. Entwärmung. Durch die Erfindung reduziert sich die auslegungsrelevante Peak-Leistung auf den Bedarf im Standby-Betriebsmodus der Komponenten mit Dauerversorgung.

Durch eine Schutzschaltung und der Wahl der Spannungslevels des DC/DC-Wandlers der erfindungsgemäß vorgeschlagenen Batterie einerseits und des zusätzlichen DC/DC-Wandlers andererseits lässt sich der Stromfluss umschalten, sobald der zusätzliche DC/DC-Wandler aktiv ist.

Üblicherweise haben die mit 12V-Spannung dauerversorgten Komponenten im Fahrzeug eine unterschiedliche Leistungsaufnahme im Standby-Betriebsmodus und im Aktiv-Betriebsmodus. Durch die Schutzeinrichtung kann der DC/DC-Wandler der erfindungsgemäß vorgeschlagenen Batterie kostengünstiger auf die niedrigere Leistung ausgelegt werden. Die Leistung im Aktiv-Betriebsmodus wird durch den zusätzlichen DC/DC-Wandler zur Verfügung gestellt.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung einer erfindungsgemäß vorgeschlagenen Batterie gemäß einer ersten Ausführungsform,
- Figur 2: eine schematische Darstellung einer erfindungsgemäß vorgeschlagenen Batterie gemäß einer zweiten Ausführungsform und
- Figur 3: eine schematische Darstellung eines erfindungsgemäß vorgeschlagenen Batteriesystems.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

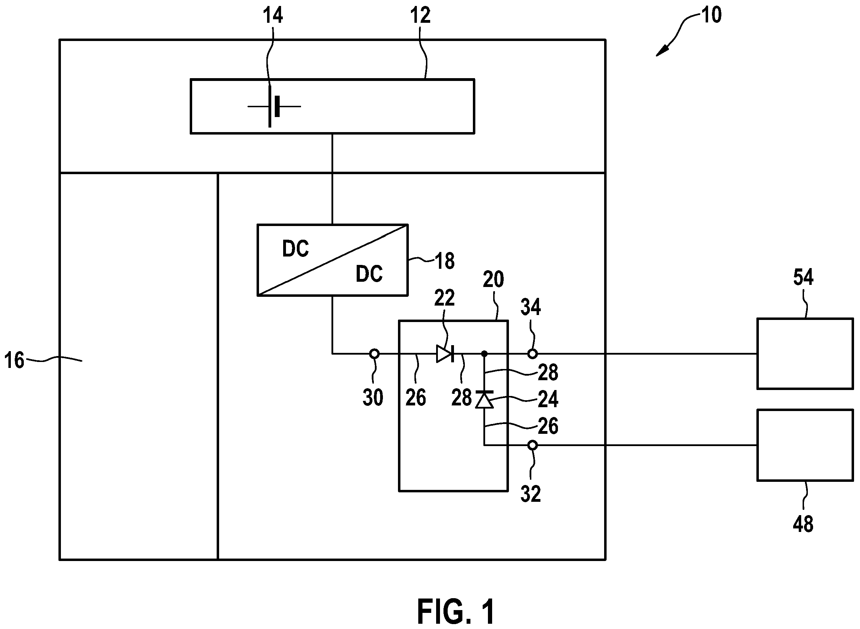

Figur 1 zeigt eine schematische Darstellung einer erfindungsgemäß vorgeschlagenen Batterie 10 gemäß einer ersten Ausführungsform.

Die Batterie 10 umfasst mindestens ein Batteriepack 12. Vorliegend in Figur 1 ist nur ein Batteriepack 12 dargestellt. Die Batterie 10 kann auch mehrere Batteriepacks 12 aufweisen, die seriell oder parallel miteinander verschaltet sind, um eine gewünschte Ausgangsspannung zur erreichen. Vorzugsweise ist die Batterie 10 als eine 48V-Batterie ausgebildet.

Das Batteriepack 12 weist dabei mindestens einer Batteriezelle 14 auf. Umfasst das Batteriepack 12 mehrere Batteriezellen 14, können die Batteriezellen 14 ebenfalls seriell oder parallel miteinander verschaltet sein.

Die Batterie 10 weist weiterhin ein Batteriemanagementsystem 16 zur Überwachung und Steuerung des mindestens einen Batteriepacks 12 auf. Das Batteriemanagementsystem 16 ist vorliegend in Figur 1 in der Batterie 10 installiert.

Die Batterie 10 umfasst ferner einen DC/DC-Wandler 18. Vorliegend in Figur 1 ist der DC/DC-Wandler 18 ebenfalls in der Batterie 10 installiert. Der DC/DC-Wandler 18 ist eingangsseitig mit dem mindestens einen Batteriepack 12 verbunden.

Aus Figur 1 geht hervor, dass die Batterie 10 ferner eine Schutzeinrichtung 20 umfasst, die ein erstes elektrisches Einwegelement 22 und ein zweites elektrisches Einwegelement 24 aufweist. Dabei sind das erste und zweite elektrische Einwegelement 22, 24 als Diode ausgebildet. Denkbar ist aber auch dass das erste und zweite elektrische Einwegelement 22, 24 als ideale Diode ausgebildet sein.

Das erste und zweite elektrische Einwegelement 22, 24 weisen jeweils einen Stromeingang 26 und einen Stromausgang 28 auf. Der Stromeingang 26 des ersten elektrischen Einwegelements 22 ist dabei mit einem ersten Eingang 30 der Schutzeinrichtung 20 verbunden. Der Stromeingang 26 des zweiten elektrischen Einwegelements 24 ist dabei mit einem zweiten Eingang 32 der Schutzeinrichtung 20 verbunden. Der Stromausgang 28 des ersten elektrischen Einwegelements 22 und der Stromausgang 28 des zweiten elektrischen Einwegelements 24 sind dabei miteinander und mit einem Ausgang 34 der Schutzeinrichtung 20 verbunden.

Dabei ist der DC/DC-Wandler 18 ausgangsseitig mit dem ersten Eingang 30 der Schutzeinrichtung 20 verbunden. Der zweite Eingang 32 der Schutzeinrichtung 20 ist dabei mit einer Gleichspannungsquelle 48 verbindbar. Der Ausgang 34 der Schutzeinrichtung 20 ist dabei mit einer ersten Verbrauchergruppe 54 verbindbar. Vorteilhaft können Komponenten der ersten Verbrauchergruppe 54, wie beispielsweise Echtzeituhren oder interner Wecker eines Fahrzeugs, dadurch mit einer Dauerversorgung versorgt werden.

Figur 1 ist zu entnehmen, dass die Schutzeinrichtung 20 ebenfalls in der Batterie 10 installiert ist. Vorzugsweise kann die Schutzeinrichtung 20 in dem DC/DC-Wandlers 18 installiert sein. Alternativ kann die Schutzeinrichtung 20 auch beispielsweise in einem Kabelbaum eines Fahrzeugs integriert sein.

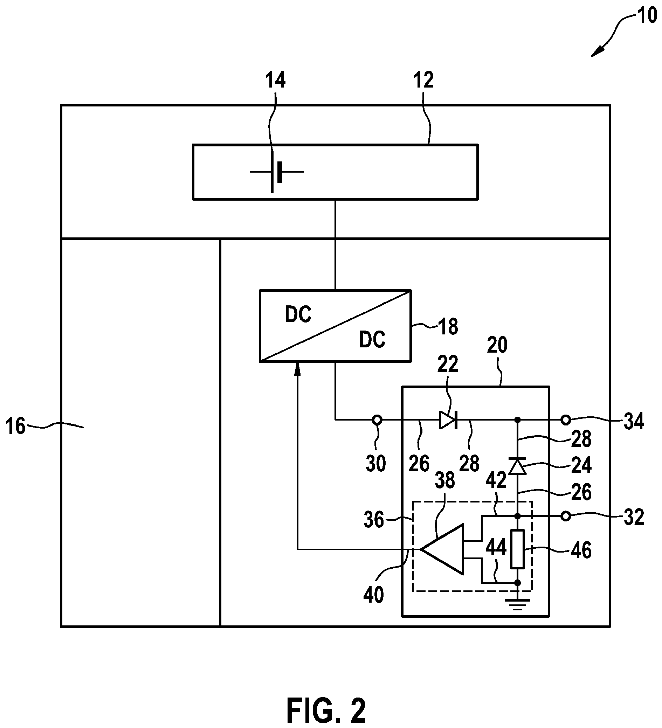

Figur 2 zeigt eine schematische Darstellung einer erfindungsgemäß vorgeschlagenen Batterie 10 gemäß einer zweiten Ausführungsform.

Die in Figur 2 dargestellte Batterie 10 gemäß der zweiten Ausführungsform ist ähnlich wie die in Figuren 1 dargestellte Batterie 10 gemäß der ersten Ausführungsform.

Die in Figur 2 dargestellte Batterie 10 gemäß der zweiten Ausführungsform ist unterscheidet sich von der in Figuren 1 dargestellten Batterie 10 gemäß der ersten Ausführungsform dadurch, dass die Schutzeinrichtung 20 ein Mittel 36 aufweist, das eingerichtet ist, den DC/DC-Wandler 18 in Abhängigkeit der Ausgangsspannung der Gleichspannungsquelle 48 (vgl. Figur 1) zu schalten, nämlich zu aktivieren und zu deaktivieren.

Dabei weist das Mittel 36 zur Deaktivierung des DC/DC-Wandlers 18 einen Differenzverstärker 38 auf. Dabei ist ein Differenzverstärker-Ausgang 40 zum Deaktivieren des DC/DC-Wandlers 18 mit diesem verbunden. Dabei ist ein erster Differenzverstärker-Eingang 42 mit dem zweiten Eingang 32 der Schutzeinrichtung 20 verbunden und ein zweiter Differenzverstärker-Eingang 44 ist dabei mit der Masse verbunden. Dabei ist ein Widerstand 46 zwischen dem ersten und zweiten Differenzverstärker-Eingang 42, 44 geschaltet. Alternativ kann der Differenzverstärker 38 auch als Komparator mit einem Spannungsteiler bestehend aus zwei Widerständen ausgeführt sein. Dies hat den Vorteil eines geringeren Stromverbrauchs.

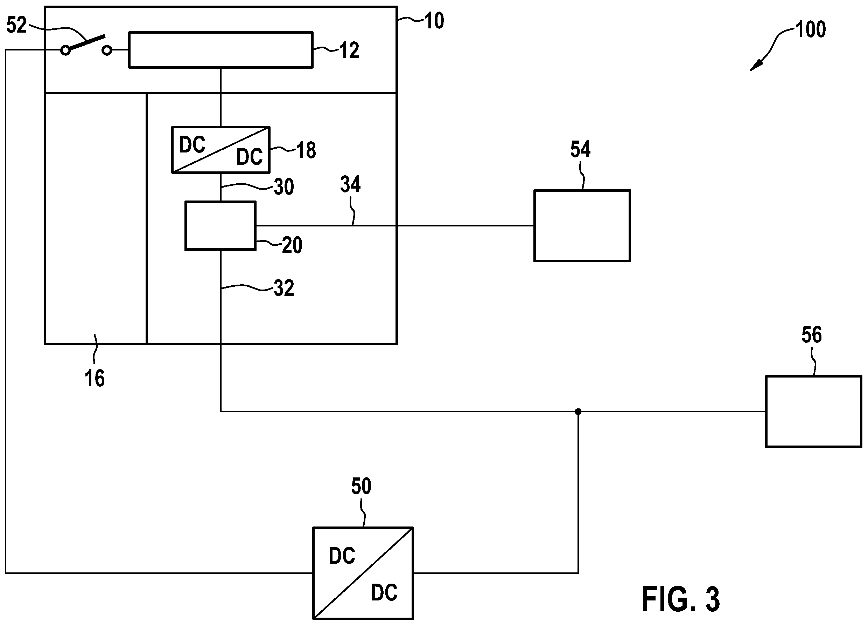

Figur 3 zeigt eine schematische Darstellung eines erfindungsgemäß vorgeschlagenen Batteriesystems 100.

Dabei umfasst das Batteriesystem 100 eine erfindungsgemäß vorgeschlagene Batterie 10 gemäß der ersten Ausführungsform, welche in Figur 1 dargestellt ist. Selbstverständlich kann eine Batterie 10 gemäß der zweiten Ausführungsform, welche in Figur 2 dargestellt ist, in das Batteriesystem 100 eingesetzt werden.

Der Ausgang 34 der Schutzeinrichtung 20 ist dabei mit einer ersten Verbrauchergruppe 54 verbunden. Dadurch können Komponenten der ersten Verbrauchergruppe 54 dauerhaft versorgt werden.

Das Batteriesystem 100 umfasst ferner eine Gleichspannungsquelle 48 (vgl. Figur 1), die vorliegend in Figur 3 einen zusätzlichen DC/DC-Wandler 50 aufweist. Der zusätzliche DC/DC-Wandler 50 ist eingangsseitig mit dem Batteriepack 12 der erfindungsgemäß vorgeschlagenen Batterie 10 mittels einer Schalteinrichtung 52 verbindbar. Ausgangsseitig ist der zusätzliche DC/DC-Wandler 50 mit dem zweiten Eingang 32 der Schutzeinrichtung 20 verbunden. Ausgangsseitig ist der zusätzliche DC/DC-Wandler 50 auch mit der zweiten Verbrauchergruppe 56 verbunden.

Das erfindungsgemäß vorgeschlagene Batteriesystem 100 kann mit einem Standby-Betriebsmodus und einem Aktiv-Betriebsmodus eingerichtet sein. Im Standby-Betriebsmodus ist nur der DC/DC-Wandler 18 der Batterie 10 mit geringer Leistung aktiv und versorgt die Komponenten der ersten Verbrauchergruppe 54 mit Dauerversorgung. Im Aktiv-Betriebsmodus, wie beispielsweise ein Fahrzeug ist angeschaltet, ist der zusätzliche DC/DC-Wandler 50, der leistungsfähiger als der DC/DC-Wandler 18 der Batterie 10 ist, aktiv und versorgt die Komponenten der ersten und zweiten Verbrauchergruppe 54, 56.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Batterie (10) umfassend mindestens ein Batteriepack (12), das mindestens eine Batteriezelle (14) aufweist, und einen DC/DC-Wandler (18), welcher eingangsseitig mit dem mindestens einen Batteriepack (12) verbunden ist,
**dadurch gekennzeichnet, dass**
die Batterie (10) ferner eine Schutzeinrichtung (20) umfasst, die ein erstes elektrisches Einwegelement (22) und ein zweites elektrisches Einwegelement (24) aufweist,
wobei das erste und zweite elektrische Einwegelement (22, 24) jeweils einen Stromeingang (26) und einen Stromausgang (28) aufweisen, wobei der DC/DC-Wandler (18) ausgangsseitig mit dem Stromeingang (26) des ersten elektrischen Einwegelements (22) verbunden ist, wobei der Stromeingang (26) des zweiten elektrischen Einwegelements (24) mit einer Gleichspannungsquelle (48) verbindbar ist, und
wobei der Stromausgang (28) des ersten elektrischen Einwegelements (22) und der Stromausgang (28) des zweiten elektrischen Einwegelements (24) miteinander verbunden sind und mit einer ersten Verbrauchergruppe (54) verbindbar sind.

2. Batterie (10) nach Anspruch 1, **dadurch gekennzeichnet, dass** die Schutzeinrichtung (20) ein Mittel (36) aufweist, das eingerichtet ist, den DC/DC-Wandler (18) in Abhängigkeit der Ausgangsspannung der Gleichspannungsquelle (48) zu schalten.

3. Batterie (10) nach Anspruch 2, **dadurch gekennzeichnet, dass** das Mittel (36) einen Differenzverstärker (38) aufweist,
wobei ein Differenzverstärker-Ausgang (40) zum Deaktivieren des DC/DC-Wandlers (18) mit diesem verbunden ist,
wobei ein erster Differenzverstärker-Eingang (42) mit dem Stromeingang (26) des zweiten elektrischen Einwegelements (24) verbunden ist und ein zweiter Differenzverstärker-Eingang (44) mit der Masse verbunden ist, und
wobei zwischen dem ersten und zweiten Differenzverstärker-Eingang (42, 44) ein Widerstand (46) geschaltet ist,
oder
das Mittel (36) einen Komparator mit einem Spannungsteiler aufweist, der zwei Widerständen umfasst.

4. Batterie (10) nach einem der Ansprüche 1 bis 3, **dadurch gekennzeichnet, dass**
das erste und/oder zweite elektrische Einwegelement (22, 24) als Diode und/oder ideale Diode ausgebildet sind.

5. Batterie (10) nach einem der Ansprüche 1 bis 4, **dadurch gekennzeichnet, dass**
der DC/DC-Wandler (18) in der Batterie (10) installiert ist.

6. Batterie (10) nach einem der Ansprüche 1 bis 5, **dadurch gekennzeichnet, dass**
die Schutzeinrichtung (20) in dem DC/DC-Wandlers (18) installiert ist.

7. Batteriesystem (100), umfassend eine Batterie (10) nach einem Ansprüche 1 bis 6 und eine Gleichspannungsquelle (48), die mit dem Stromeingang (26) des zweiten elektrischen Einwegelements (24) verbunden ist und mit einer zweiten Verbrauchergruppe (56) verbindbar ist.

8. Batteriesystem (100) nach Anspruch 7, **dadurch gekennzeichnet, dass** die Gleichspannungsquelle (48) einen zusätzliche DC/DC-Wandler (50) umfasst, der eingangsseitig mit dem mindestens einen Batteriepacks (12) verbindbar ist und ausgangsseitig mit dem Stromeingang (26) des zweiten elektrischen Einwegelement (24) verbunden ist und mit der zweiten Verbrauchergruppe (56) verbindbar ist.

9. Batteriesystem (100) nach einem der Anspruch 7 oder 8, **dadurch gekennzeichnet, dass**
die Ausgangspannung der Gleichspannungsquelle (48) größer als die Ausgangsspannung des DC/DC-Wandlers (18) ist.

10. Fahrzeug, das eine Batterie (10) nach einem der Ansprüche 1 bis 6 und/oder ein Batteriesystem (100) nach einem der Ansprüche 7 bis 9 umfasst.
